(19) Europäisches Patentamt / European Patent Office / Office européen des brevets

(11) **EP 3 834 025 B1**

(12) **EUROPÄISCHE PATENTSCHRIFT**

(45) Veröffentlichungstag und Bekanntmachung des Hinweises auf die Patenterteilung:
**03.09.2025 Patentblatt 2025/36**

(21) Anmeldenummer: **19746048.8**

(22) Anmeldetag: **19.07.2019**

(51) Internationale Patentklassifikation (IPC):
**G02B 21/00** (2006.01)      **G02B 21/36** (2006.01)
**G02B 21/06** (2006.01)

(52) Gemeinsame Patentklassifikation (CPC):
**G02B 21/0032; G02B 21/0076; G02B 21/06; G02B 21/367**

(86) Internationale Anmeldenummer:
**PCT/EP2019/069526**

(87) Internationale Veröffentlichungsnummer:
**WO 2020/030410 (13.02.2020 Gazette 2020/07)**

(54) **BELEUCHTUNGSANORDNUNG FÜR EIN MIKROSKOP, MIKROSKOP UND VERFAHREN ZUR BELEUCHTUNG EINES PROBENVOLUMENS IN EINEM MIKROSKOP**

ILLUMINATION ARRANGEMENT FOR A MICROSCOPE, MICROSCOPE AND METHOD FOR ILLUMINATING A SAMPLE VOLUME IN A MICROSCOPE

INSTALLATION D'ÉCLAIRAGE POUR UN MICROSCOPE, MICROSCOPE ET PROCÉDÉ D'ÉCLAIRAGE D'UN VOLUME D'ÉCHANTILLON DANS UN MICROSCOPE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.08.2018 DE 102018213543**
**21.12.2018 DE 102018222839**

(43) Veröffentlichungstag der Anmeldung:
**16.06.2021 Patentblatt 2021/24**

(73) Patentinhaber: **Leica Microsystems CMS GmbH**
**35578 Wetzlar (DE)**

(72) Erfinder: **FAHRBACH, Florian**
**68167 Mannheim (DE)**

(74) Vertreter: **Schaumburg und Partner Patentanwälte mbB**
**Mauerkircherstraße 31**
**81679 München (DE)**

(56) Entgegenhaltungen:
**WO-A1-2012/003259      WO-A1-2016/016642**
**WO-A2-03/012528      DE-A1- 102016 212 020**
**US-A1- 2013 286 181**

• TOM VETTENBURG ET AL: "Light-sheet microscopy using an Airy beam", NATURE METHODS, vol. 11, no. 5, 6 April 2014 (2014-04-06), pages 541 - 544, XP055217022, ISSN: 1548-7091, DOI: 10.1038/nmeth.2922
• MARTÍ DUOCASTELLA ET AL: "Selectable light-sheet uniformity using tuned axial scanning : Selectable Light-Sheet Uniformity", MICROSCOPY RESEARCH AND TECHNIQUE., vol. 80, no. 2, 1 February 2017 (2017-02-01), GB, pages 250 - 259, XP055536570, ISSN: 1059-910X, DOI: 10.1002/jemt.22795
• KOZAWA YUICHI ET AL: "Long depth-of-focus imaging by a non-diffracting optical needle under strong aberration", 2017 CONFERENCE ON LASERS AND ELECTRO-OPTICS (CLEO), THE OPTICAL SOCIETY, 14 May 2017 (2017-05-14), pages 1 - 2, XP033238577, DOI: 10.1364/CLEO_SI.2017.SF2C.4
• JÖRG G RITTER ET AL: "A cylindrical zoom lens unit for adjustable optical sectioning in light sheet microscopy References and links / BIOMEDICAL OPTICS EXPRESS 185", BIOMEDICAL OPTICS EXPRESS, vol. 170, no. 347, 1 January 2012 (2012-01-01), pages 211 - 219, XP055137860

• ACEBAL P ET AL: "Generation of High-Quality Tunable One-Dimensional Airy Beams Using the Aberrations of a Single Lens", IEEE PHOTONICS JOURNAL, IEEE, USA, vol. 4, no. 5, 1 October 2012 (2012-10-01), pages 1273 - 1280, XP011488198, ISSN: 1943-0655, DOI: 10.1109/JPHOT.2012.2207712

**Beschreibung**

Die Erfindung betrifft eine Beleuchtungsanordnung für ein Mikroskop in Form eines Lichtblatt- oder SPIM-Mikroskops oder eines Schiefeebenenmikroskops, wie ein OPM- oder SCAPE-Mikroskop, zur Beleuchtung einer Probe mit einem Lichtblatt, wobei die Beleuchtungsanordnung einen Beleuchtungseingang zur Einspeisung eines Beleuchtungsstrahlenbündels entlang einer optischen Achse der Beleuchtungsanordnung, einen einer Probenseite zugewandten Beleuchtungsausgang zur Ausgabe des Beleuchtungsstrahlenbündels zur Probenseite und ein fokussierendes optisches System festgelegter Schärfentiefe umfasst.

Ferner betrifft die Erfindung Mikroskop in Form eines Lichtblatt- oder SPIM-Mikroskops oder eines Schiefeebenenmikroskops, wie ein OPM- oder SCAPE-Mikroskop und ein Verfahren zur Beleuchtung eines Probenvolumens in einem Mikroskop, insbesondere in einem Lichtblatt- oder SPIM-Mikroskop oder in einem Schiefeebenenmikroskop, wie einem OPM- oder SCAPE-Mikroskop.

Die oben genannten Mikroskope haben gemeinsam, dass die Beleuchtung einer Probe mit einem sogenannten Lichtblatt erfolgt, welches sich zweidimensional erstreckt und die geringste Ausdehnung entlang einer Dickenrichtung senkrecht zur zweidimensionalen Ausdehnung aufweist. In diesem Fall spricht man von einem statischen Lichtblatt, wohingegen ein sogenanntes virtuelles Lichtblatt erst dadurch entsteht, dass ein Beleuchtungsstrahlenbündel mit beispielsweise rundem Strahlquerschnitt fokussiert und entlang einer Richtung senkrecht zur Ausbreitungsrichtung und zur Dickenrichtung gescannt wird, sodass bei ausreichend schneller Scanbewegung scheinbar ein Lichtblatt entsteht.

Das Lichtblatt sollte möglichst dünn sein, um lediglich einen entlang der Detektionsrichtung limitierten Bereich der Probe zu beleuchten. Ein sehr dünnes Lichtblatt weist allerdings eine zu geringe Schärfentiefe, d.h. zu geringe Ausdehnung in Propagationsrichtung auf, um die Probe großflächig mit dem dünnen Lichtblatt zu beleuchten.

Wobei in einem solchen Fall mehrere Scanning-Schritte hintereinandergeschaltet werden, um ein längeres, sogenanntes virtuelles Lichtblatt zu erzeugen. Dies zieht längere Aufnahmezeiten nach sich.

Die folgenden Dokumente beschäftigen sich mit der Vergrößerung der Tiefenschärfe eines Lichtblattes: WO 03/0125 28 A2; Tom Vettenburg et al. ("Light sheet microscopy using an Airy beam", Nature Method, Band 11, Nr. 5, 6. April 2014); Marti Duocastella et al. ("Selectable light-sheet uniformity using tuned axial scanning: Selectable Light-Sheet Uniformity", Microscopy Research and Technique, Band 80, Nr. 2, 1. Februar 2017); Kozawa Yuichi et al. ("Long depth-of-focus imaging by a non-diffracting optical needle under strong Aberration", 2017 Conference on lasers and electro-optics, 14. Mai 2017); Jörg G. Ritter et al. ("A cylindrical zoom lens unit for adjustable optical sectioning in light sheet microscopy References and links / Biomedical Optics Express 185", Band 170, Nr. 347, 1. Januar 2012); WO 2016/016642 A1; DE 10 2016 212 020 A1; Acebal P. et al. ("Generations of High-Quality Tunable One-Dimensional Airy Beams Using the Aberrations of a Sigle Lens", IEEE Photonics Journal, Band 4, Nr. 5, 1. Oktober 2012; US 2013/286 181 A1; und WO 2012/003 259 A1.

Aufgabe der vorliegenden Erfindung ist es somit, eine Beleuchtungsanordnung, ein Mikroskop und ein Verfahren zu schaffen, welche kürzere Aufnahmezeiten erlauben.

Die eingangs genannte Beleuchtungsanordnung löst diese Aufgabe dadurch, dass die Beleuchtungsanordnung mindestens ein optisches Modifikationselement zur geometrischen Modifikation des Beleuchtungsstrahlenbündels aufweist, wobei das optische Modifikationselement ausgestaltet ist, das Beleuchtungsstrahlenbündel mit sphärischen Aberrationen zu beaufschlagen, wobei am probenseitigen Beleuchtungsausgang der Beleuchtungsanordnung unterschiedliche Strahlen des Beleuchtungsstrahlenbündels die optische Achse innerhalb eines Achsenabschnittbereichs an voneinander beabstandeten Stellen schneiden, und dass sich der Achsenschnittbereich entlang der optischen Achse über eine Länge erstreckt, die mindestens so groß ist, wie die Schärfentiefe des fokussierenden optischen Systems.

Das eingangs genannte erfindungsgemäße Mikroskop löst die obige Aufgabe dadurch, dass das Mikroskop ein Probenvolumen und eine erfindungsgemäße Beleuchtungsanordnung zur Beleuchtung des Probenvolumens mit einem Lichtblatt umfasst.

Das erfindungsgemäße Verfahren löst die obige Aufgabe dadurch, dass es die folgenden Verfahrensschritte umfasst: Einspeisen eines Beleuchtungsstrahlenbündels in einen Beleuchtungseingang einer Beleuchtungsanordnung mit fokussierendem optischen System festgelegter Schärfentiefe entlang einer optischen Achse; Beaufschlagen des Beleuchtungsstrahlenbündels mit sphärischen Aberrationen; und Erzeugen von Schnittpunkten von Strahlen des Beleuchtungsstrahlenbündels mit der optischen Achse an voneinander beabstandeten Stellen in einem Achsenschnittbereich, der sich entlang der optischen Achse über eine Länge erstreckt, die mindestens so groß ist, wie die Schärfentiefe des fokussierenden optischen Systems.

Die erfindungsgemäße Beleuchtungsanordnung, das erfindungsgemäße Mikroskop und das erfindungsgemäße Verfahren können durch die folgenden, jeweils unabhängig voneinander kombinierbaren Ausgestaltungen weiter verbessert werden.

Der probenseitige Beleuchtungsausgang kann auch als Beleuchtungsausgang oder probenseitiger Ausgang bezeichnet werden. Unter der geometrischen Modifikation des Beleuchtungs-strahlengangs ist eine Variation geometrischer Parameter der Ausbreitung desselben zu verstehen, beispielsweise die Richtung oder Konvergenz/Divergenz des Beleuchtungsstrahlenganges. Ebenso können spektral abhängige Ausbreitungsparameter durch das optische Modifikationselement modifiziert werden.

Die erfindungsgemäße Beleuchtungsanordnung kann insbesondere einen Achsenschnittbereich aufweisen, der sich entlang der optischen Achse über eine Länge erstreckt, die größer ist als die Länge eines Achsenschnittbereiches einer bekannten Beleuchtungsanordnung, die kein erfindungsgemäßes optisches Modifikationselement aufweist. Die Länge des Achsenschnittbereiches, entlang der optischen Achse gemessen, wird folglich geringer, wenn das optische Modifikationselement aus der erfindungsgemäßen Beleuchtungsanordnung entfernt wird. Im Umkehrschluss vergrößert das Hinzufügen des erfindungsgemäßen optischen Modifikationselements zu einer bekannten Beleuchtungsanordnung die Länge des Achsenschnittbereiches der Beleuchtungsanordnung.

Die Schärfentiefe kann über die Fläche oder über die Intensität des fokussierten Strahlenbündels definiert sein. Innerhalb der Schärfentiefe kann sich die Querschnittsfläche senkrecht zur Ausbreitungsrichtung verdoppeln bzw. die Intensität halbieren.

Die Schärfentiefe kann bevorzugt die nach Rayleigh definierte Rayleighsche Schärfentiefe sein.

Die Schärfentiefe ist als Länge anzusehen, insbesondere als die Länge der Strecke entlang der Ausbreitungsrichtung, über die sich der Durchmesser des Strahlenbündels, zum Beispiel der FWHM-Durchmesser (d.h. der Durchmesser der vollen Breite bei halbem Maximum) nicht maßgeblich ändert (also zum Beispiel verdoppelt).

Für paraxiale Strahlen kann die Schärfentiefe über die Rayleigh-Länge definiert bzw. über diese beschrieben werden.

Insbesondere kann sich der Achsenschnittbereich, in welchem die unterschiedlichen Strahlen des Beleuchtungsstrahlenbündels die optische Achse schneiden über mindestens drei, vier, fünf bis über 10 oder 20 Schärfentiefen erstrecken.

Erfindungsgemäß wird somit ein Beleuchtungsstrahlenbündel derart verzeichnet, dass sich die Schnittpunkte der Strahlen des Beleuchtungsstrahlenbündels mit der optischen Achse über mindestens die Schärfentiefe des fokussierenden optischen Systems erstrecken bzw. verteilen.

Die Rayleigh-Länge ist eine Eigenschaft, die in der Gaußschen Optik definiert ist und aussagt, nach welcher Propagationsstrecke von der Strahltaille des fokussierten Strahls aus gemessen sich die Fläche des Strahlquerschnittes verdoppelt, bzw. sich der Strahlradius um den Faktor $\sqrt{2}$ vergrößert hat. Die doppelte Rayleigh-Länge kann als Schärfentiefe bezeichnet werden. Die Rayleigh-Länge ist nur für paraxiale Strahlen definiert. Für stärker fokussierte Strahlen kann die Schärfentiefe z.B. über die Formel $\lambda/NA^2$ approximiert werden,

wobei $\lambda$ die Wellenlänge des Strahls und NA die numerische Apertur des fokussierenden optischen Systems ist.

Die Rayleigh-Länge stammt, wie bereits oben beschrieben, aus der Betrachtung Gaußscher Strahlausbreitung, stellt allerdings bei Ausleuchtung der Pupille des fokussierenden optischen Systems mit gegebener numerischer Apertur (NA < 0,4) mit einem Strahl mit Gauss'schem Profil und unveränderter Wellenlänge eine feste Eigenschaft des optischen Systems dar (für NA > 0,4 siehe oben).

Die verwendeten Objektive können abblendbar sein, so dass eine effektiv vom Objektiv genutzte Apertur betrachtet werden kann. Diese ist im Allgemeinen kleiner als die Apertur bei voller Ausleuchtung der Objektive gegebener NA. Eine effektive Apertur verringert die NA, wobei eine Verringerung der NA ebenso durch nicht vollständiges Ausleuchten, d.h. durch Unterleuchten des Objektivs möglich ist.

Die Schnittpunkte der unterschiedlichen Strahlen des Beleuchtungsstrahlenbündels mit der optischen Achse, wobei die optische Achse insbesondere durch das fokussierende optische System festgelegt sein kann, stammen im Gegensatz zur Rayleigh-Länge aus Betrachtungen der geometrischen Optik. Da die Rayleigh-Länge bzw. die Schärfentiefe jedoch als charakteristisches Merkmal eines optischen Systems angesehen wird, besteht kein Widerspruch darin, den Achsenschnittbereich, der alle Schnittpunkte der unterschiedlichen Strahlen des Beleuchtungsstrahlenbündels mit der optischen Achse enthält, mit der Rayleigh-Länge in Relation zu setzen.

Die erfindungsgemäße Beleuchtungsanordnung kann ausgestaltet sein, monochromatische oder mehrere Wellenlängen umfassende Beleuchtungsstrahlenbündel aufzunehmen und zur Probenseite hin auszugeben.

Das fokussierende optische System kann ein beugungsbegrenztes optisches System ohne bzw. mit minimierten Abbildungsfehlern sein.

In einer weiteren Ausgestaltung der erfindungsgemäßen Beleuchtungsanordnung kann das optische Modifikationselement mindestens eine Linse mit sphärischer Aberration oder ein Linsensystem mit sphärischer Aberration aufweisen. Dies kann beispielsweise auf einfache Weise dadurch realisiert werden, dass sphärische Linsen großer Apertur verwendet werden.

Auch kann eine Orientierung der Linse gewählt werden, welche sphärische Aberration hervorruft. So kann beispielsweise die Brechung des Beleuchtungsstrahlenbündels nicht gleichmäßig auf die Grenzflächen der Linse bzw. des Linsensystems verteilt sein. Ebenso kann eine speziell mit sphärischer Aberration konstruierte und geschliffene Linse verwendet werden. Die beispielhaften und nicht einschränkenden Ausgestaltungen des optischen Modifikationselements sind somit (a) eine sphärische Linse, (b) eine asphärische Linse, die abweichend zu ihrer Spezifikation betrieben wird, oder (c) eine Linse oder Optik beliebiger Form, die sphärische Aberrationen aufweist.

Im Allgemeinen ist die Abweichung bzw. der Versatz der Schnittpunkte unterschiedlicher Strahlen des Beleuchtungsstrahlenbündels abhängig vom Abstand der jeweiligen Strahlen von der optischen Achse in der Eintrittspupille. Auf einer beleuchtungsseitigen Objektseite eines optischen Systems (d.h. nicht in der Pupille) wie der Beleuchtungsanordnung sind es die in unterschiedliche Winkel der Strahlen, die sphärische Aberration hervorrufen können.

Ebenso ist es möglich, optische Systeme, die die Verwendung in einer Immersionsflüssigkeit vorsehen, ohne diese Immersionsflüssigkeit zu betreiben. Eine derartige Fehlanpassung (mismatch) führt bereits zu sphärischen Aberrationen.

Die Beleuchtungsanordnungen aus dem Stand der Technik sind zumeist mit großem Aufwand dahingehend korrigiert, dass diese aberrationsfreie Foki liefern. Die bewusste Verzeichnung, das heißt das Beaufschlagen mit sphärischer Aberration, hat den Vorteil, dass die Schärfentiefe (zweifache Rayleigh-Länge) des Beleuchtungsstrahls, insbesondere des Lichtblattes unter geringer Erhöhung bzw. im Idealfall Beibehaltung des schmalen Querschnitts in Dickenrichtung gesteigert werden kann.

Strahlen, die sphärische Aberration aufweisen und ein Lichtblatt ausbilden haben ein charakteristisches transversales Strahlprofil. Dieses ist im Wesentlichen dadurch charakterisiert, dass die Intensität des Beleuchtungsstrahls entlang einer Richtung senkrecht zur Ausbreitungsrichtung einen breiten Sockel aufweist, der im Allgemeinen einen zentralen Peak, d.h. ein Intensitätsmaximum, aufweist. Der Peak setzt sich aus den Foki (im Sinne von Schnittpunkten der Strahlen mit der optischen Achse) der unterschiedlichen Strahlen des Beleuchtungsstrahlenbündels zusammen, wobei die Foki entlang der optischen Achse voneinander beabstandet sind und sich über den Achsenschnittbereich erstrecken.

Der Sockel hingegen umfasst jene Strahlen des Beleuchtungsstrahlenbündels, welche an der betrachteten Stelle der optischen Achse in Ausbreitungsrichtung des Beleuchtungsstrahlenbündels entweder noch nicht fokussiert sind (d.h. diese Strahlen schneiden die optische Achse an einer Position weiter in Ausbreitungsrichtung) oder bereits defokussiert sind (d.h. diese Strahlen sind an einer Position weiter entgegen der Ausbreitungsrichtung fokussiert und an der betrachteten Position bereits wieder defokussiert).

Im Allgemeinen ist die Intensität des Beleuchtungsstrahlenbündels im Sockel geringer als im Peak und kann beispielsweise lediglich weniger als 25 % oder gar weniger als 10 % der Intensität des Peaks betragen. Insbesondere ist es vorteilhaft, wenn die Leistung, also Intensität x Fläche, im Peak nicht größer als im Sockel ist.

Der schmale Peak kann dazu verwendet werden, einen schmalen Bereich in der Probe über eine Länge zu beleuchten, welche größer ist als die Schärfentiefe des beugungsbegrenzten, aberrationsfreien fokussierenden optischen Systems.

Der Sockel hingegen beleuchtet einen deutlich größeren Bereich um den Peak herum (in einer Dickenrichtung gesehen, wobei die Dickenrichtung senkrecht zur Ausbreitungsrichtung des Beleuchtungsstrahlenbündels orientiert ist).

Bei einem statischen Lichtblatt ist im Allgemeinen keine bzw. kaum sphärische Aberration in der Ebene des Lichtblatts zu beobachten.

Im virtuellen Lichtblatt kann die sphärische Aberration entlang beider senkrecht zur Ausbreitungsrichtung stehender Achsen auftreten. Die sphärische Aberration in der Ebene wird durch das Scannen gemittelt, entlang der Dickenrichtung ist die sphärische Aberration im Hinblick auf den Sockel nachteilig.

In einer weiteren Ausgestaltung kann das Beleuchtungsstrahlenbündel nur entlang der Dickenrichtung eine sphärische Aberration aufweisen bzw. vom optischen Modifikationselement nur eine solche auf das Beleuchtungsbündel aufprägbar sein.

Da die oben genannten Mikroskope und Verfahren der Mikroskopie darauf basieren, eine Probe selektiv in einem schmalen Bereich mittels eines Lichtblattes zu beleuchten, kann der Sockel somit die Qualität der Abbildung des beleuchteten Bereiches verringern.

Die sphärische Aberration kann insbesondere anisotrop im Lichtblatt auftreten. Bevorzugt kann die Aberration in einer Ebene des Lichtblatts auftreten, die durch die Ausbreitungsrichtung und die Dickenrichtung aufgespannt wird.

In einer weiteren Ausgestaltung der erfindungsgemäßen Beleuchtungsanordnung kann ein Phasenmodulator vorgesehen sein, der die Phase des Beleuchtungsstrahlenbündels in Abhängigkeit von der räumlichen Lage mit Bezug zur optischen Achse ändert. Ein entsprechendes erfindungsgemäßes Verfahren ist folglich dadurch gekennzeichnet, dass in diesem die Phase des Beleuchtungsstrahlenbündels in Abhängigkeit von der räumlichen Lage mit Bezug zur optischen Achse lokal geändert wird.

Der Phasenmodulator beaufschlagt somit das fokussierende optische System mit einer sphärischen Aberration oder kann, sofern das fokussierende optische System bereits sphärischer Aberration aufweist, diese verstärken.

Der Phasenmodulator kann beispielsweise als deformierbarer Spiegel ausgestaltet sein, der entweder eine sphärische Form aufweist oder insbesondere derart deformiert werden kann, dass sphärische Aberrationen auf das Beleuchtungsstrahlenbündel beaufschlagt werden.

Der deformierbare Spiegel realisiert eine Phasenänderung durch eine Änderung der Wegstrecke einzelner Anteile bzw. Strahlen des Beleuchtungsstrahlenbündels. Als Phasenmodulator kann ebenso ein räumlicher Lichtmodulator verwendet werden, welcher eine räumliche Änderung des Brechungsindex erlaubt und somit eine optische Wegstrecke in räumlicher Abhängigkeit verändert. Der räumliche Lichtmodulator kann eine sphärische Aberration und insbesondere eine änderbare sphärischer Aberration auf das Beleuchtungsstrahlenbündel beaufschlagen, d.h. das Beleuchtungsstrahlenbündel verzeichnen.

Ist eine feste Veränderung der Phase gewünscht, so kann der Phasenmodulator als statische diffraktive Phasenplatte ausgestaltet sein. Diese wirkt ähnlich dem räumlichen Lichtmodulator, wobei jedoch die Bereiche unterschiedlicher Brechzahl statisch und nicht veränderbar sind.

Im erfindungsgemäßen Verfahren wird somit das Beleuchtungsstrahlenbündel mittels des als deformierbarer Spiegel, räumlicher Lichtmodulator oder statische (diffraktive) Phasenplatte ausgestalteten Phasenmodulators verzeichnet, sodass sich die Schnittpunkte der Strahlen des Beleuchtungsstrahlenbündels mit der optischen Achse über die mindestens zweifache Schärfentiefe des fokussierenden optischen Systems erstrecken bzw. verteilen.

In einer weiteren Ausgestaltung der erfindungsgemäßen Beleuchtungsanordnung kann das optische Modifikationselement als dreidimensionaler Volumenkörper vorbestimmter Brechzahl ausgestaltet und auf der Probenseite des fokussierenden optischen Systems angeordnet sein. Ein solches optisches Modifikationselement hat in den Vorteil, dass es in seiner einfachsten Form als Glasblock, Stufenelement oder Stufenscheibe ausgestaltet sein kann. Der Glasblock, das Stufenelement bzw. die Stufenscheibe kann zwischen das fokussierende optische System und die Probe in den Strahlengang eingebracht werden und führt in dieser Position dazu, dass die Fokuslage axial verschoben (in Ausbreitungsrichtung des Beleuchtungsstrahlenbündels) und zeitgleich sphärische Aberration aufgeprägt wird.

In einer weiteren Ausgestaltung der erfindungsgemäßen Beleuchtungsanordnung kann mindestens eine Lichtquelle vorgesehen sein, an deren Ausgang das Beleuchtungsstrahlenbündel ausgegeben und in den Beleuchtungseingang eingespeist wird.

Die Lichtquelle kann eine monochromatische Lichtquelle sein oder ein Spektrum mehrerer Wellenlängen umfassen. Die Lichtquelle kann ferner Kollimationsoptiken enthalten, welche das von der Lichtquelle emittierte Licht kollimieren und ein kollimiertes, das heißt paralleles Beleuchtungsstrahlenbündel ausgeben.

Ebenso ist es möglich, dass die Lichtquelle Optiken enthält, welche das Beleuchtungsstrahlenbündel in einem Fokus fokussieren. Bei einer solchen Ausgestaltung kann das fokussierende optische System der Beleuchtungsanordnung insbesondere im sogenannten 4f-Aufbau ausgestaltet sein, das heißt, dass der von den Optiken der Lichtquelle generierte Fokus in der objektseitigen Brennweite des fokussierenden optischen Systems liegt.

In einer weiteren Ausgestaltung der erfindungsgemäßen Beleuchtungsanordnung kann die mindestens eine Lichtquelle einen Fokus des Beleuchtungsstrahlenbündels aufweisen, wobei die Lage des Fokus entlang der optischen Achse versetzt von einer (nominellen) beleuchtungsseitigen Brennebene des fokussierenden optischen Systems ausgebildet sein kann. Auf diese nominelle beleuchtungsseitige Brennebene kann das Objektiv "gerechnet", d.h. optimiert sein.

Mit anderen Worten weicht der Aufbau der Beleuchtungsanordnung in dieser Ausgestaltung vom 4f-Aufbau ab. In einem klassischen 4f-Aufbau wird das Licht zumindest näherungsweise kollimiert in das Objektiv eingestrahlt, d.h. das Objektiv ist für diesen Fall optimiert ("gerechnet"). Eine Fokussierung wie im vorhergehenden Absatz beschrieben ist folglich insbesondere realisiert, wenn in ein Objektiv konvergentes oder divergentes Licht eingestrahlt wird. Diese Abweichung vom klassischen 4f-Aufbau beaufschlagt das Beleuchtungsstrahlenbündel mit sphärischer Aberration. Ferner kann ein in dieser Anordnung betriebenes fokussierendes optisches System speziell konstruiert sein eine Einstrahlung des Beleuchtungsstrahlenbündels in einer optischen Anordnung, die nicht dem 4f-Aufbau entspricht, zuzulassen, ohne Teile des Beleuchtungsstrahlenbündels im fokussierenden optischen System zu blockieren oder abzuschneiden. Mit anderen Worten kann das fokussierende optische System insbesondere auf eine vom 4f-Aufbau abweichende Anordnung bzw. Beleuchtung angepasst sein.

Ebenso ist es möglich, eine weitere Linse in den Strahlengang einzubringen um somit vom 4f-Aufbau abzuweichen und ein nicht-telezentrisches optisches System zu erhalten. Auch dieses kann das Beleuchtungsstrahlenbündel mit sphärischer Aberration beaufschlagen.

In weiteren Ausgestaltungen der Erfindung kann die Größe der aufgeprägten sphärischen Aberrationen an die Größe des zu untersuchenden Objektes anpassbar sein.

Definiert man die Ebene des Lichtblattes als xy-Ebene und die Dickenrichtung des Lichtblattes als Richtung der z-Achse, so findet am Beispiel eines SPIM-Mikroskops die Detektion des von der Probe ausgesandten Lichts entlang der z-Achse statt. Die x-Achse ist hierbei die Achse, die der Längsrichtung, also der Ausbreitungsrichtung des Lichtblatts und damit einer optischen Achse der Beleuchtungsanordnung entspricht.

Mit anderen Worten ist eine optische Achse einer Detektionsoptik senkrecht zum Lichtblatt orientiert. Das zuvor beschriebene transversale Strahlprofil eines Strahls mit sphärischen Aberrationen, umfassend einen Peak und einen Sockel, ergibt sich somit, wenn die Beleuchtungsintensität im Lichtblatt in Abhängigkeit von der Position auf der z-Achse aufgetragen wird.

Durch eine Beaufschlagung des Beleuchtungsstrahlenbündels mit sphärischer Aberrationen können axiale Modulationen im Lichtblatt entstehen, also Modulationen der Lichtintensität entlang der optischen Achse. Diese axialen Modulationen entstehen durch Interferenz der durch die Aberrationen entstehenden Strahlen des Beleuchtungsstrahlenbündels: Strahlen des Beleuchtungsstrahlenbündels schneiden sich an verschiedenen Stellen innerhalb des Lichtblattes. Bei zueinander kohärenten Strahlen resultiert dies auf Grund von Interferenz der Strahlen miteinander in einer inhomogenen Intensitätsverteilung in der xy-Ebene (in welcher das Lichtblatt ausgebildet ist) entlang der x-Achse.

Diese axialen Modulationen können reduziert oder gar vermieden werden, indem eine Lichtquelle mit kurzer Kohärenzlänge verwendet wird. Nur innerhalb der Kohärenzlänge der verwendeten Lichtquelle treten axiale Modulationen auf, so dass über Laufstreckenunterschiede der Bereich der Interferenz verlassen und ein homogenes Lichtblatt generiert werden kann. Bevorzugt ist die Kohärenzlänge der verwendeten Lichtquelle kleiner als die Schärfentiefe, besonders bevorzugt kleiner als die Hälfte der Schärfentiefe und ganz besonders bevorzugt kleiner als ein Viertel der Schärfentiefe. Inkohärente Lichtquellen oder breitbandige Lichtquellen wie beispielsweise Weißlichtlaser können diese Bedingung einer kurzen Kohärenzlänge erfüllen. Auch können Kurzpulslaser und Ultrakurzpulslaser geeignet sein, Modulationen zu vermeiden, da diese eine kurze Koheränzlänge aufweisen (beispielsweise bei einer Pulslänge von 100 fs in etwa 30 $\mu$m).

Besonders bevorzugt weist die Lichtquelle, wie beispielsweise eine breitbandige Laserlichtquelle oder eine Weißlichtquelle, eine Kohärenzlänge auf, die kleiner als 1 mm, bevorzugt kleiner als 0,5 mm und weiter bevorzugt <100 $\mu$m ist. Eine solche Laserlichtquelle, insbesondere ein Kurzpulslaser oder Ultrakurzpulslaser, hat bevorzugt eine Impulsdauer der von ihm ausgesandten Lichtimpulse, die kleiner als 5 ps, bevorzugt <2 ps, weiter bevorzugt <1 ps und besonders bevorzugt im Bereich weniger 100 Femtosekunden ist.

Rein beispielhaft und nicht einschränkend seien als mögliche Laserlichtquellen Ti:Saphir Laser, Nd- oder Yb-basierte Laser und Laser, die das von ihnen ausgegebene optische Spektrum beispielsweise in einem Filament, d.h. allgemein in einer nichtlinearen optischen Vorrichtung verbreitern und somit eine breitbandige, bis hin zur oktavenspannenden Lichtquelle darstellen, genannt.

Die erfindungsgemäße Beleuchtungsanordnung kann somit wenigstens eine Lichtquelle aus der Liste, umfassend - eine inkohärente Lichtquelle; - eine breitbandige Lichtquelle; - einen Weißlichtlaser; - einen Kurzpulslaser; und - einen Ultrakurzpulslaser aufweisen.

Die Lichtquelle kann bevorzugt Lichtimpulse mit einer Dauer kürzer als 1 Pikosekunde (ps) emittieren und/oder eine Kohärenzlänge kleiner als 100 Mikrometer ($\mu$m) aufweisen.

Alternativ kann das Beleuchtungsstrahlenbündel, welches das Lichtblatt ausbildet, auch oszillieren, sofern die Belichtungszeit des Detektors, mittels dem das von der Probe ausgesandte Licht detektiert wird, so gewählt wird, dass axiale Modulationen ausgemittelt werden. Durch diese Mittelung, für welche die Belichtungszeit größer als die Periodendauer der zeitlichen Änderung der Interferenz ist, kann also ebenfalls ein die Probe homogen ausleuchtendes Lichtblatt erhalten werden.

Es gibt grundsätzlich zwei mögliche Herangehensweisen, um die auftretenden, unerwünschten Interferenzen, d.h. die axialen Modulationen, zu reduzieren oder zu vermeiden. Als erste Möglichkeit kann durch die Wahl einer geeigneten Kohärenzlänge des verwendeten Beleuchtungslichtes, d.h. insbesondere durch geeignete Wahl der Lichtquelle, ein Auftreten von Interferenz weitestgehend vermieden werden. Dies ist obenstehend mit Bezug zu Lichtquellen kurzer Kohärenzlänge dargelegt.

Sofern das Beleuchtungsstrahlenbündel jedoch symmetrisch auf ein symmetrisch ausgestaltetes Modifikationselement trifft, werden von dem optischen Modifikationselement modifizierte Randstrahlen, die sich bezüglich der optischen Achse gegenüberliegen und eine gleiche Entfernung zur optischen Achse aufweisen, in ihrem Kreuzungspunkt Interferenz zeigen. Allerdings ist der räumliche Bereich, in welchem die Interferenzen auftreten, lokal durch die Kohärenzlänge begrenzt und ferner findet in diesem ohnehin lokal begrenzten Bereich eine ungestörte Überlagerung mit anderen Strahlen des Beleuchtungsstrahlenbündels statt, wobei diese weiteren Strahlen des Beleuchtungsstrahlenbündels die Kohärenzbedingungen nicht erfüllen und somit zu einem homogenen Intensitätsanstieg in dem lokal begrenzten Bereich führen können.

Eine weitere Möglichkeit axiale Modulationen aufgrund von Interferenz zu reduzieren oder zu vermeiden ist es, diese nach deren Entstehung bzw. während ihrer Entstehung durch geeignete Gegenmaßnahmen auszumitteln. Wie oben bereits erwähnt kann dies beispielsweise durch eine Oszillation der axialen Modulationen geschehen, die beispielsweise durch ein bewegtes optisches Element herbeigeführt werden kann. In einer solchen Ausgestaltung bewegen sich die axialen Modulation zwar mit dem bewegten optischen Element mit, allerdings kann diese Bewegung derart gewählt werden, dass sie schneller erfolgt als eine Belichtungszeit einer Detektionsvorrichtung. D.h. beispielsweise dass die Periodendauer einer Schwingung des bewegten optischen Elements größer ist als die Aufnahmezeit (jene Zeit, während der ein Abbild des Lichtblattes auf einem Detektor abgebildet und ein entsprechendes elektrisches Signal erzeugt wird). Dies führt dazu, dass Änderungen in der detektierten Lichtintensität, die schneller sind als die Aufnahmezeit, integrierend, d.h. gemittelt erfasst werden und die axialen Modulationen somit nicht detektiert bzw. aufgenommen werden.

Ferner ist es ebenso möglich, die erhaltenen axialen Modulationen im Nachgang, d.h. nach Aufnahme des Bildes des Lichtblattes, rechnerisch zu entfernen. Mittels eines geeigneten von einem Computer ausführbaren Programmes können die axialen Modulationen zuerst ermittelt und analysiert (beispielsweise durch die schnelle Fourier-Transformation, FFT) und anschließend durch entsprechende Anwendung von Filtern, beispielsweise Software-Filtern herausgefiltert werden, so dass sich eine homogene Intensitätsverteilung des Lichtblattes ergibt.

Hierfür können Referenz- bzw. Kalibrationsmessungen vorgesehen sein, in welchen eine bekannte Probe beleuchtet und detektiert wird. Die notwendigen Einstellungen zur Ermittlung der axialen Modulationen und zur Entfernung derselben können in einem nichtflüchtigen Speicher gespeichert werden und bei der Aufnahme weiterer Bilder des Lichtblattes ausgelesen und auf die gemessenen Daten angewandt werden. Somit kann lediglich eine Kalibrationsmessung notwendig sein, um weitere Bilder des Lichtblattes automatisch durch Anwendung der vorab ermittelten und gespeicherten Berechnungsvorschriften und/oder Filter von den axialen Modulationen rechnerisch zu befreien.

Das erfindungsgemäße Verfahren kann in weiteren Ausgestaltungen die folgenden Verfahrensschritte umfassen, um die Qualität der Abbildung weiter zu steigern: Erzeugen von mindestens zwei mit sphärischen Aberrationen beaufschlagten Beleuchtungsstrahlenbündeln; Überlagern der mindestens zwei Beleuchtungsstrahlenbündel auf der Probenseite und Erzeugen von Interferenzstrukturen aufgrund des Überlagerns; und (a) Variieren der Lage der Interferenzstrukturen sowie Auswerten der erhaltenen Interferenzstrukturen zur Steigerung des Kontrastes oder (b) Oszillieren der Interferenzstrukturen zur Homogenisierung der Beleuchtungsintensität des Lichtblattes.

Mittels diesen Ausgestaltungen ist es möglich, die detektierten Anteile der Probe, welche durch den Sockel des transversalen Querschnitts des Beleuchtungsstrahlenbündels in der Probe, d.h. des Lichtblattes, beleuchtet wurden, von den Anteilen des Peaks zu trennen.

Die mindestens zwei Beleuchtungsstrahlenbündel werden bevorzugt unter einem Winkel miteinander überlagert und sind bevorzugt gegeneinander verschiebbar. Dies kann beispielsweise durch einen mit einem Piezo-Element versehenen Spiegel realisiert sein.

Da der Sockel des transversalen Strahlprofils die noch nicht fokussierten oder bereits defokussierten Anteile einzelner Strahlen des Beleuchtungsstrahlenbündels umfasst, können sich hier zwar Interferenzen dieser Strahlanteile herausbilden, da diese aber nicht in der nominellen Brennebene des Detektionsobjektivs liegen, sondern entlang der entsprechenden optischen Achse davor und dahinter, werden die Interferenzen stark verwaschen bzw. unscharf durch das Detektionsobjektiv abgebildet, so dass keine erkennbaren Interferenzstrukturen des Sockels abgebildet werden.

Die Strahlanteile im Peak des transversalen Strahlprofils interferieren ebenfalls unter Ausbildung deutlicher Interferenzstrukturen miteinander und bilden ein Interferenzmuster aus, welches jedoch scharf abgebildet wird.

Nunmehr können für ein Verfahren nach (a) die mindestens zwei Beleuchtungsstrahlenbündel relativ zueinander verschoben werden, wobei die Verschiebung bevorzugt um einen ganzzahligen Anteil wie 1/3 (beispielsweise auch 1/2; 1/4; 1/5 etc.) einer räumlichen Periode der Interferenzstreifen erfolgt. Durch diese Verschiebung ändert sich lediglich das Signal aus der Fokusebene der Detektionsoptik, wohingegen sich die Signalanteile des Sockels nicht ändern. Durch eine nachfolgende Verrechnung von mindestens drei (2; 4; 5 etc.) aufgenommenen Datensätzen kann der vom Sockel erzeugte Hintergrund ausgeblendet und der Kontrast gesteigert werden.

Mit anderen Worten beschreibt die Ausgestaltung des Verfahrens nach (a) ein optisches Hochpassfilter. Dieses trennt die Interferenzstrukturen hoher Raumfrequenz in der Fokusebene der Detektionsoptik (diese Fokusebene entspricht der xy-Ebene, in welcher das Lichtblatt ausgebildet ist, insbesondere das durch den Peak ausgebildete Lichtblatt) von den niederfrequenten Anteilen, die sich in Richtung der optischen Achse der Detektionsoptik über bzw. unter der Fokusebene befinden.

Alternativ können in einer Ausgestaltung des Verfahrens nach (b) die erzeugten Interferenzstrukturen gegeneinander oszillierend verschoben werden. Beispielsweise können durch eine Oszillation der Beleuchtungsstrahlenbündel die Interferenzstrukturen oszilliert und damit ausgemittelt und das Lichtblatt hierdurch homogenisiert werden.

Im Folgenden wird die vorliegende Erfindung anhand beispielhafter Zeichnungen näher erläutert. Die technischen Merkmale der unterschiedlichen Zeichnungen können beliebig miteinander kombiniert bzw. weggelassen werden, wenn es nicht auf den technischen Effekt des weggelassenen technischen Merkmals ankommt. Gleiche Elemente als auch Elemente gleicher Funktion werden der Übersichtlichkeit halber mit dem gleichen Bezugszeichen versehen.

Es zeigen:

Fig. 1      eine schematische Darstellung eines SPIM-Mikroskops aus dem Stand der Technik;

Fig. 2a-2c      sphärische Aberrationen der erfindungsgemäßen Beleuchtungsanordnung und transversale Strahlprofile;

Fig. 3      eine weitere Ausgestaltung der erfindungsgemäßen Beleuchtungsanordnung;

Fig. 4      eine weitere Ausgestaltung der erfindungsgemäßen Beleuchtungsanordnung;

Fig. 4a      eine weitere Ausgestaltung der erfindungsgemäßen Beleuchtungsanordnung;

Fig. 5      eine weitere Ausgestaltung der erfindungsgemäßen Beleuchtungsanordnung;

Fig. 6 eine weitere Ausgestaltung der erfindungsgemäßen Beleuchtungsanordnung; und

Fig. 7 eine weitere Ausgestaltung der erfindungsgemäßen Beleuchtungsanordnung.

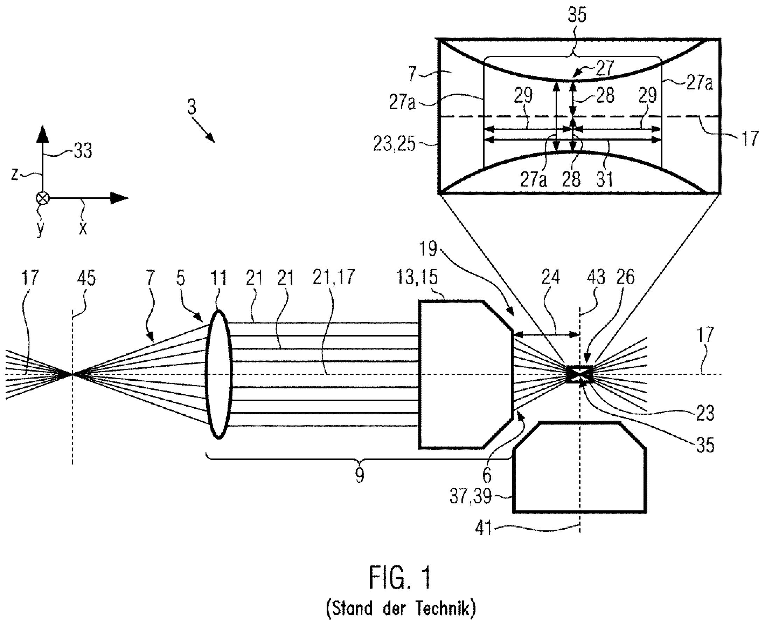

In Fig. 1 ist ein Mikroskop 1 anhand eines SPIM-Mikroskops 3 schematisch dargestellt. Das SPIM-Mikroskop 3 kann auch als Lichtblatt-Mikroskop 3 bezeichnet werden.

Das in Fig. 1 gezeigte SPIM-Mikroskop 3 aus dem Stand der Technik umfasst einen Beleuchtungseingang 5, durch welchen ein Beleuchtungsstrahlenbündel 7 in die Beleuchtungsanordnung 9 eingekoppelt werden kann und einen probenseitigen Beleuchtungsausgang 6, durch welchen das Beleuchtungsstrahlenbündel 7 ausgegeben werden kann. Die gezeigte Beleuchtungsanordnung 9 umfasst ferner eine Tubuslinse 11 und ein fokussierendes optisches System 13, welches in Form eines Beleuchtungsobjektivs 15 ausgestaltet ist.

Das Beleuchtungsstrahlenbündel 7 wird entlang einer optischen Achse 17 in die Beleuchtungsanordnung 9 eingespeist, als auch auf einer Probenseite 19 entlang der optischen Achse 17 ausgegeben.

Auf der Probenseite 19 werden die unterschiedlichen Strahlen 21 des Beleuchtungsstrahlenbündels 7 in einem Fokusbereich 23 fokussiert. Der Fokusbereich 23 ist in einem Arbeitsabstand 24 vom fokussierenden optischen System 13 entfernt und befindet sich in einem Probenvolumen 26. In diesem befindet sich die bildseitige Brennebene 43 der Beleuchtungsanordnung 9. Die objektseitige Brennebene 45 ist links in Fig. 1 gezeigt. Von den unterschiedlichen Strahlen 21 sind lediglich drei zwischen der Tubuslinse 11 und dem Beleuchtungsobjektiv 15 mit einem Bezugszeichen versehen. Ein Strahl 21 fällt mit der optischen Achse 17 zusammen.

Der Fokusbereich 23 ist in Fig. 1 vergrößert dargestellt, wobei die Vergrößerung 25 schematisch die Gaußsche Strahlausbreitung zeigt. Der nicht vergrößerte Fokusbereich 23 ist gemäß dem Modell der geometrischen Optik dargestellt.

In dieser Darstellung wird das Beleuchtungsstrahlenbündel bis zu einer Strahltaille 27 eingeschnürt. Die Strahltaille 27 kann mit Hilfe eines Strahltaillenradius 28 bzw. mit $w_0$ numerisch erfasst und bezeichnet werden. Der zweifache Strahltaillenradius 28 entspricht einem Strahldurchmesser 27a an der Strahltaille 27. Dieser ist aus Gründen der Übersichtlichkeit leicht versetzt zur Strahltaille 27 eingezeichnet.

Der Fokusbereich 23 ist ferner durch die sogenannte Rayleigh-Länge 29 charakterisiert. Die Rayleigh-Länge 29 kennzeichnet jene entlang einer x-Achse gemessene Entfernung zwischen der Lage der Strahltaille 27 und einer Position in bzw. entgegen der Richtung der x-Achse, an welcher sich der Strahldurchmesser 27a um den Faktor $\sqrt{2}$ (Quadratwurzel von 2) im Vergleich zur Strahltaille 27 vergrößert hat. Die doppelte Rayleigh-Länge 29 kann auch als Schärfentiefe 31 bezeichnet werden. Innerhalb der Schärfentiefe 31 kann eine Verbreiterung des Fokusbereiches 23 entlang einer der y-Achse entsprechenden Dickenrichtung 33 vernachlässigt werden.

Der Fokusbereich 23 ist bei einem statischen Lichtblatt nicht rotationssymmetrisch zur optischen Achse 17 angeordnet. In und entgegen der Richtung einer z-Achse ändert sich der gezeigte Fokusbereich 23 nicht, d.h. der Fokusbereich 23 bildet ein Lichtblatt 35 aus, welches sich in y-Richtung und x-Richtung, d.h. in einer xy-Ebene erstreckt.

Ferner weist das SPIM-Mikroskop 3 eine Detektionsoptik 37 auf, die als Detektionsobjektiv 39 ausgestaltet ist. Die Detektionsoptik 37 weist ferner eine zweite optische Achse 41 auf, die sowohl zum Lichtblatt 35, als auch zur optischen Achse 17 der Beleuchtungsanordnung 9 senkrecht orientiert ist.

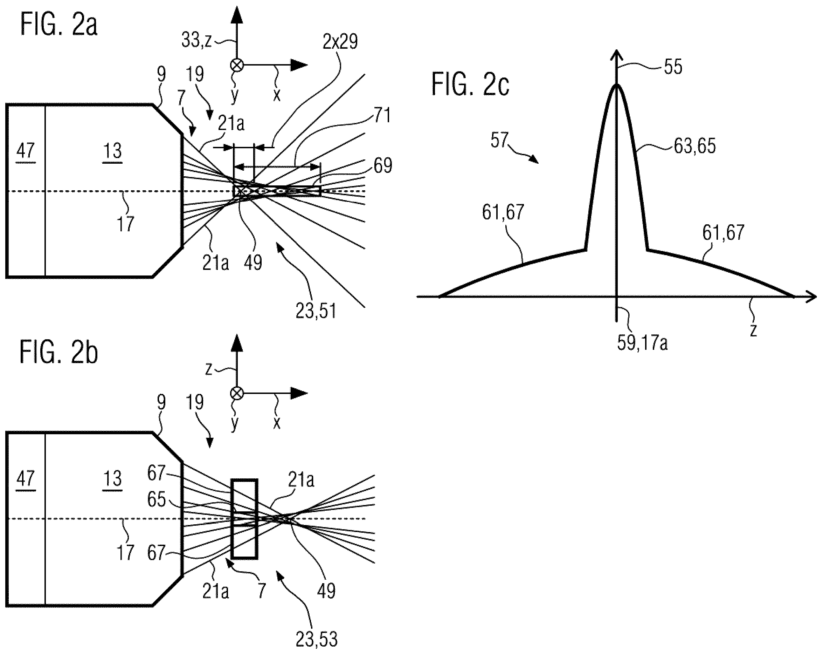

In den Figuren 2a und 2b sind unterschiedliche Ausgestaltungen der erfindungsgemäßen Beleuchtungsanordnung 9 gezeigt. Beide Darstellungen zeigen schematisch, dass die Beleuchtungsanordnung 9 das fokussierende optische System 13 und ein optisches Modifikationselement 47 umfasst.

Auf der Probenseite 19 ist erkennbar, dass Randstrahlen 21a in der in Fig. 2a gezeigten Ausgestaltung der Beleuchtungsanordnung 9 zu stark abgelenkt sind und die optische Achse 17 in einem Schnittpunkt 49 schneiden, der einen geringeren Abstand zum fokussierenden optischen System 13 aufweist als die weiteren Schnittpunkte 49. Die weiteren Schnittpunkte 49 sind nicht mit Bezugzeichen versehen. Im Fokusbereich 23 der in Fig. 2a gezeigten Beleuchtungsanordnung 9 spricht man von positiver sphärischer Aberration 51.

In der Ausgestaltung der Beleuchtungsanordnung 9, die in Fig. 2b gezeigt ist, schneiden die Randstrahlen 21a die optische Achse 17 in einem Schnittpunkt 49, der weiter vom fokussierenden optischen System 13 entfernt ist, als die weiteren Schnittpunkte 49 (nicht mit Bezugszeichen versehen). Im Fokusbereich 23 der in Fig. 2b gezeigten Ausgestaltung der Beleuchtungsanordnung 9 tritt somit negative sphärische Aberration 53 auf.

Wird in einen der in den Figuren 2a und 2b gezeigten Fokusbereiche 23 entlang der z-Achse eine Intensität 55 des Beleuchtungsstrahlenbündels 7 in Abhängigkeit von der Lage auf der z-Achse aufgetragen, so erhält man eine in Fig. 2c schematisch dargestellte Intensitätsverteilung 57, welche die Intensität 55 über die z-Achse aufträgt.

Die z-Koordinate eines Koordinatenursprungs 59 entspricht der Lage der optischen Achse 17a.

Die Intensitätsverteilung 57 umfasst einen Sockel 61 und einen Peak 63, wobei sich der Peak 63 aus fokussierten Anteilen 65 und der Sockel 61 sich aus nicht fokussierten Anteilen 67 zusammensetzt. Diese sind schematisch in Fig. 2b durch Rechtecke dargestellt.

Die nicht fokussierten Anteile 67 können Strahlanteile sein, die zwischen der Beleuchtungsanordnung 9 und dem bzw. den entsprechenden Schnittpunkten 49 liegen, d.h. noch nicht fokussierte Strahlanteile sein. Ebenso umfassen die nicht fokussierten Anteile 67 Strahlanteile, die von der Beleuchtungsanordnung 9 aus gesehen hinter dem bzw. den entsprechenden Schnittpunkten 49 liegen, d.h. Strahlanteile, in denen die entsprechenden Strahlen 21 bereits defokussiert sind.

Die in Fig. 2c gezeigte Intensitätsverteilung kann in der erfindungsgemäßen Beleuchtungsanordnung 9 entlang der y-Achse innerhalb eines Achsenschnittbereiches 69 erhalten werden. Der Achsenschnittbereich 69 ist in Fig. 2a schematisch mittels eines Rechteckes dargestellt. Die Länge 71 des Achsenabschnittbereichs 69 ist in der erfindungsgemäßen Beleuchtungsanordnung 9 größer als die zweifache Rayleigh-Länge 29, die schematisch in Fig. 2a eingezeichnet ist.

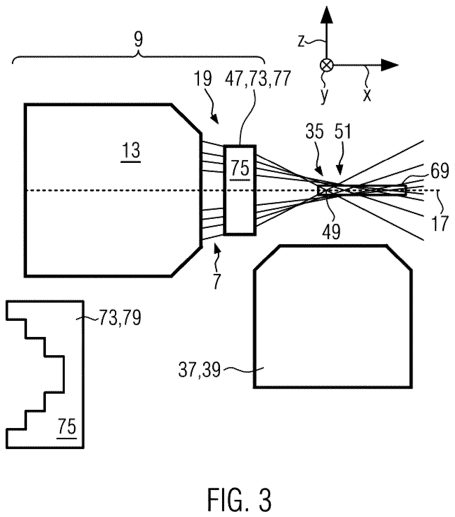

In Fig. 3 ist eine weitere Ausgestaltung der erfindungsgemäßen Beleuchtungsanordnung 9 gezeigt. In dieser Ausgestaltung ist auf der Probenseite 19 des fokussierenden optischen Systems 13 das optische Modulationselement 47 angeordnet. Letzteres ist in der in Fig. 3 gezeigten Ausgestaltung ein dreidimensionaler Volumenkörper 73, der eine vorbestimmte Brechzahl 75 aufweist.

Der gezeigte dreidimensionale Volumenkörper 73 ist als Glasblock 77 ausgestaltet und kann in einer weiteren Ausgestaltung durch ein Stufenelement 79 ersetzt werden. Dieses erlaubt eine Dickenvariation und den Fokus zu verschieben, und somit axiale Modulationen auszugleichen. In einer nicht gezeigten Ausgestaltung kann der dreidimensionale Volumenkörper 73 durch eine Linse ersetzt werden. Ebenso ist es denkbar, dass der Volumenkörper 73 als transparentes Objekt mit einem Brechungsindex ausgestaltet ist, der von jenem Brechungsindex abweicht, für den das Objektiv vorgesehen, d.h. konstruiert und optimiert ist.

Das Stufenelement 79 ist in Fig. 3 schematisch außerhalb des Strahlenganges gezeigt, wobei erkennbar ist, dass diese sich durch zur optischen Achse 17 hin verjüngende Stufen gekennzeichnet ist und somit einem dreidimensionalen Volumenkörper entspricht, der aus mehreren Glasblöcken 77 zusammengesetzt ist. Ferner ist auch die Nutzung eines rotationssymmetrischen Stufenelements 79 denkbar, insbesondere bei Erzeugung eines virtuellen Lichtblattes.

Der dreidimensionale Volumenkörper 73 in der erfindungsgemäßen Beleuchtungsanordnung 9 beaufschlagt das Beleuchtungsstrahlenbündel 7 mit positiver sphärischer Aberration 51 und bildet eine Vielzahl von Schnittpunkten 49 heraus, die sich innerhalb des Achsenschnittbereichs 69 erstrecken. Das sich ausbildende Lichtblatt 35 erstreckt sich in x-Richtung und weist eine Intensitätsverteilung 57 entlang der z-Achse wie in Fig. 2c gezeigt auf.

Das Lichtblatt 35 beleuchtet eine nicht gezeigte Probe, deren gestreutes oder reflektiertes Licht (nicht gezeigt) von der als Detektionsobjektiv 39 ausgestalteten Detektionsoptik 37 aufgesammelt, zu einem Detektor (nicht gezeigt) weitergeleitet, und vom Detektor detektiert wird.

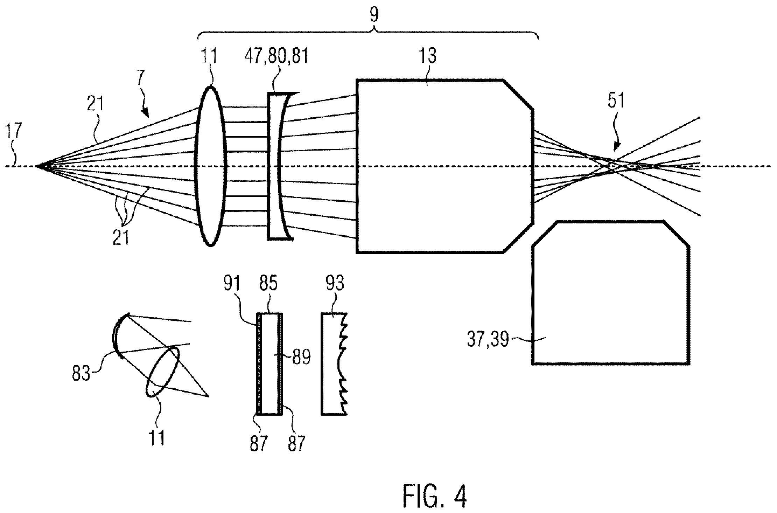

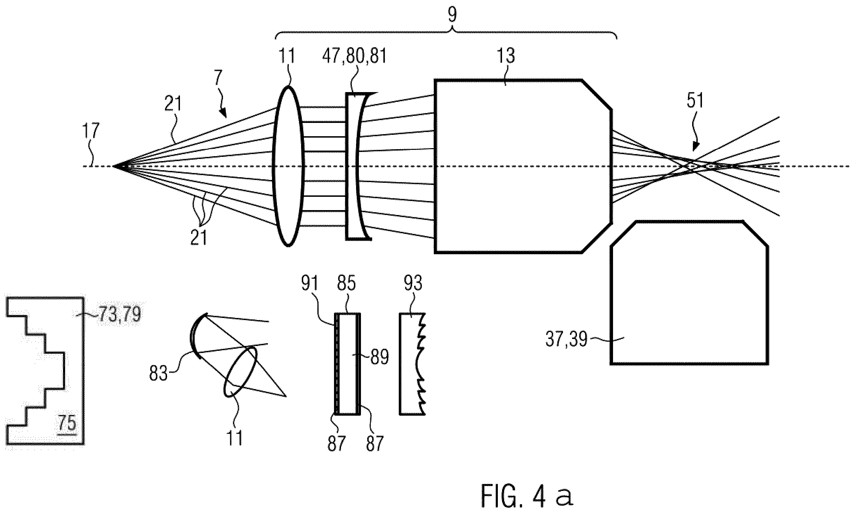

In Fig. 4 ist eine weitere Ausgestaltung der erfindungsgemäßen Beleuchtungsanordnung 9 gezeigt. Diese Ausgestaltung ähnelt dem in Fig. 1 gezeigten Aufbau aus dem Stand der Technik, d.h. umfasst eine Tubuslinse 11 und das fokussierende optische System 13.

Allerdings weist die in Fig. 4 gezeigte Ausgestaltung der erfindungsgemäßen Beleuchtungsanordnung 9 zusätzlich das optische Modifikationselement 47 auf, welches als Phasenmodulator 80, insbesondere als Kompensationsplättchen 81 ausgestaltet ist. Das Kompensationsplättchen 81 wird im Allgemeinen zur Kompensation sphärischer Aberration genutzt, führt in der in Fig. 4 gezeigten Ausgestaltung allerdings zu einer Über- bzw. Unterkompensation der sphärischen Aberration, die auf der Probenseite 19 des fokussierenden optischen Systems 13 erkennbar ist.

In Fig. 4 sind ferner drei weitere Möglichkeiten der Ausgestaltung des optischen Modifikationselementes 47 gezeigt. Diese können das im Strahlengang eingebrachte Kompensationsplättchen 81 ersetzen. Denkbar sind beispielsweise deformierbare Spiegel 83, welche allerdings eine Umlenkung des Strahlenganges (andere Lage der Tubuslinse 11) voraussetzen.

Des Weiteren ist die Anwendung eines räumlichen Lichtmodulators 85 möglich, welcher aus zwei Elektroden 87 und beispielsweise einer Schicht aus Flüssigkristallen 89 besteht. Eine Elektrode 87 des räumlichen Lichtmodulators 85 ist als Pixelelektrode 91 ausgestaltet, an deren einzelne Pixel unterschiedliche Spannungen anlegbar sind.

Die Fig. 4 zeigt eine statische diffraktive Phasenplatte 93, die eine feste Phasenänderung des eingestrahlten Beleuchtungsstrahlenbündels 7 in Abhängigkeit von der Entfernung der einzelnen Strahlen 21 von der optischen Achse 17 erzeugt.

In Fig. 4a ist im Vergleich zu Fig. 4 ferner gezeigt, dass das optische Modifikationselement 47 durch ein Stufenelement 79 ersetzt werden kann. Dieses erlaubt eine Dickenvariation und hiermit, den Fokus zu verschieben, und somit axiale Modulationen auszugleichen.

Das Stufenelement 79 ist in Fig. 4a ebenso schematisch außerhalb des Strahlenganges gezeigt, wobei obige Erläuterungen zum Stufenelement 79 der Fig. 3 auch auf das in Fig. 4a gezeigte Stufenelement 79 zutreffen.

Das optische Modifikationselement 47 kann eine der oben erwähnten möglichen Ausgestaltungen des optischen Modifikationselements 47 sein. Beispielsweise ein Glasblock 77, ein Stufenelement 79, ein Phasenmodulator 80, ein Kompensationsplättchen 81, ein deformierbarer Spiegel 83 oder ein räumlicher Lichtmodulator 85. Diese können wie in Fig. 4a gezeigt zwischen der Lichtquelle 17 und dem fokussierenden optischen System 13, insbesondere der Tubuslinse des Systems 13 angeordnet sein. Dies entspricht einer Beleuchtungsseite (nicht gezeigt).

Ebenso ist es jedoch möglich, dass die oben genannten möglichen Ausgestaltungen des optischen Modifikationselements 47 auf der Probenseite 19 angeordnet werden. Dies ist rein beispielhaft in den Fig. 2b und Fig. 3 gezeigt.

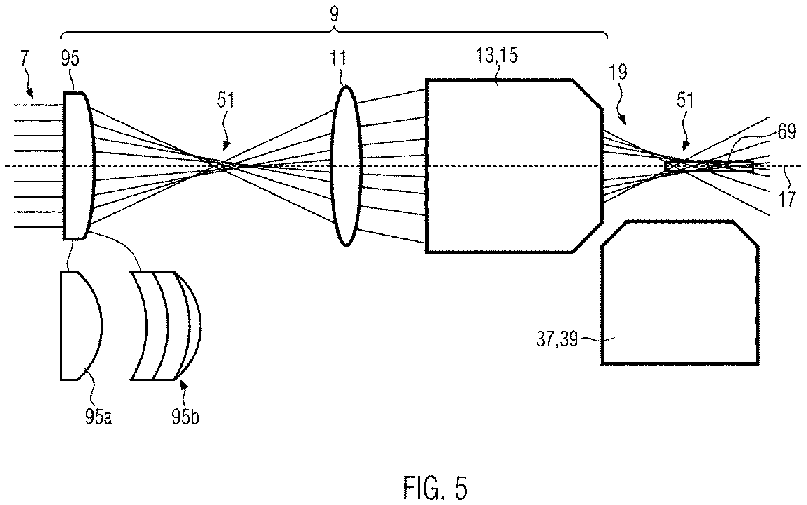

Fig. 5 zeigt eine weitere Ausgestaltung der erfindungsgemäßen Beleuchtungsanordnung 9, wobei in dieser vor die Tubuslinse 11 eine speziell geformte asphärische Optik 95 in den Strahlengang eingebracht ist. Diese beaufschlagt das Beleuchtungsstrahlenbündel 7 mit positiver sphärischer Aberration 51, welche von der Tubuslinse und dem fokussierenden optischen System 13 zur Probenseite 19 hin übertragen wird, so dass sich auch auf der Probenseite 19 der Achsenschnittbereich 69 ausbildet.

Die asphärische Optik kann beispielsweise als Linse 95a mit sphärischer Aberration 51, 53 oder aber als Linsensystem 95b mit sphärischer Aberration 51, 53 ausgestaltet sein.

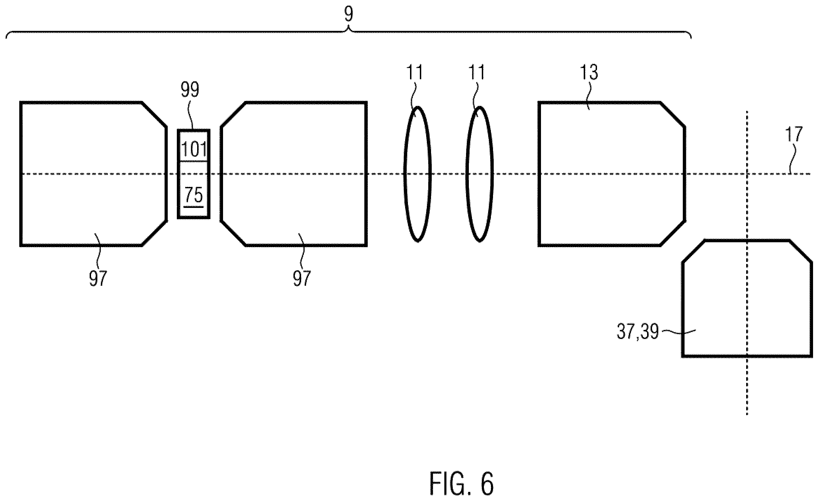

In Fig. 6 ist eine weitere Ausgestaltung der erfindungsgemäßen Beleuchtungsanordnung 9 gezeigt. Diese umfasst neben dem fokussierenden optischen System 13 und zwei Tubuslinsen 11 zwei zusätzliche Relayobjektive 97 und ein zwischen den Relayobjektiven 97 angeordneter Tank 99. In dem Tank 99 befindet sich ein Medium 101 mit einer Brechzahl 75.

Die gezeigte Anordnung der Relayobjektive 97 mit dem Tank 99 ist dahingehend korrigiert, dass bei einem korrekt ausgewählten Medium 101, d.h. einem Medium 101 mit definierter Brechzahl 75 die Anordnung der Relayobjektive 97 keine sphärische Aberration aufweist.

Das in Fig. 6 gezeigte Medium 101 weist allerdings eine Brechzahl 75 auf, die von der vorbestimmten Brechzahl 75 abweicht. Somit beaufschlagt die Anordnung der Relayobjektive 97 die Beleuchtungsanordnung 9 mit sphärischer Aberration. Der Übersichtlichkeit halber ist in Fig. 6 lediglich die optische Achse 17, nicht jedoch alle Strahlengänge eingezeichnet.

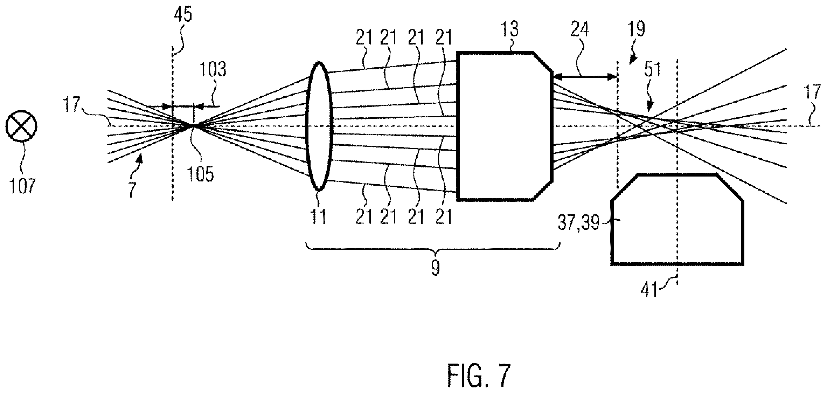

In der Fig. 7 ist eine weitere Ausgestaltung der erfindungsgemäßen Beleuchtungsanordnung 9 gezeigt.

Diese ähnelt dem in Fig. 1 gezeigten Aufbau aus dem Stand der Technik, wobei jedoch das in die Beleuchtungsanordnung 9 eingestrahlte Beleuchtungsstrahlenbündel 7 nicht mehr in der objektseitigen Brennebene 45 fokussiert ist. Dies führt dazu, dass die Strahlen 21 zwischen der Tubuslinse 11 und dem fokussierenden optischen System 13 nicht mehr parallel zur optischen Achse 17 verlaufen und somit auf der Probenseite 19 der Beleuchtungsanordnung 9 sphärische Aberration 51 hervorrufen.

Der Versatz 103 des Fokus 105 einer schematisch angedeuteten Lichtquelle 107 entlang der optischen Achse 17 von der objektseitigen Brennebene 45, auch beleuchtungsseitige Brennebene 45 genannt, ruft somit die positive sphärische Aberration 51 hervor.

In der in Fig. 7 gezeigten Ausgestaltung der erfindungsgemäßen Beleuchtungsanordnung 9 kann insbesondere das fokussierende optische System 13 derart konstruiert sein, dass die nicht parallelen Strahlen 21 durch dieses hindurch transmittiert werden und nicht blockiert werden. Die Beleuchtungsanordnung 9 der Fig. 7 ist in der gezeigten Ausgestaltung nicht im 4f-Aufbau betrieben.

**Bezugszeichen**

| | |
|---|---|
| 1 | Mikroskop |
| 3 | SPIM-Mikroskop |
| 5 | Beleuchtungseingang |
| 6 | probenseitiger Beleuchtungsausgang |
| 7 | Beleuchtungsstrahlenbündel |
| 9 | Beleuchtungsanordnung |
| 11 | Tubuslinse |
| 13 | fokussierendes optisches System |
| 15 | Beleuchtungsobjektiv |
| 17 | optische Achse |
| 17a | Lage der optischen Achse |
| 19 | Probenseite |
| 21 | Strahl |
| 21a | Randstrahl |
| 23 | Fokusbereich |
| 24 | Arbeitsabstand |
| 25 | Vergrößerung |
| 26 | Probenvolumen |
| 27 | Strahltaille |
| 27a | Strahldurchmesser |
| 28 | Strahltaillenradius |
| 29 | Rayleigh-Länge |
| 31 | Schärfentiefe |
| 33 | Dickenrichtung |
| 35 | Lichtblatt |
| 37 | Detektionsoptik |
| 39 | Detektionsobjektiv |
| 41 | zweite optische Achse |
| 43 | bildseitige Brennebene |
| 45 | objektivseitige Brennebene |
| 47 | optisches Modifikationselement |
| 49 | Schnittpunkt |
| 51 | positive sphärische Aberration |
| 53 | negative sphärische Aberration |
| 55 | Intensität |
| 57 | Intensitätsverteilung |
| 59 | Koordinatenursprung |
| 61 | Sockel |
| 63 | Peak |
| 65 | fokussierte Anteile |

| 67 | nicht fokussierte Anteile |
| 69 | Achsenschnittbereich |
| 71 | Länge |
| 73 | dreidimensionaler Volumenkörper |
| 75 | Brechzahl |
| 77 | Glasblock |
| 79 | Stufenelement |
| 80 | Phasenmodulator |
| 81 | Kompensationsplättchen |
| 83 | defomierbarer Spiegel |
| 85 | räumlicher Lichtmodulator |
| 87 | Elektrode |
| 89 | Schicht aus Flüssigkristallen |
| 91 | Pixelelektrode |
| 93 | statische diffraktive Phasenplatte |
| 95 | asphärische Optik |
| 95a | Linse |
| 95b | Linsensystem |
| 97 | Relayobjektiv |
| 99 | Tank |
| 101 | Medium |
| 103 | Versatz |
| 105 | Fokus |
| 107 | Lichtquelle |

**Patentansprüche**

1. Beleuchtungsanordnung (9) für ein Mikroskop (1) in Form eines Lichtblatt- oder SPIM-Mikroskops (3) oder eines Schiefeebenenmikroskops, wie ein OPM- oder SCAPE-Mikroskop, zur Beleuchtung einer Probe mit einem Lichtblatt (35), wobei die Beleuchtungsanordnung (9) einen Beleuchtungseingang (5) zur Einspeisung eines Beleuchtungsstrahlenbündels (7) entlang einer optischen Achse (17) der Beleuchtungsanordnung (9), einen einer Probenseite (19) zugewandten Beleuchtungsausgang (6) zur Ausgabe des Beleuchtungsstrahlenbündels (7) zur Probenseite (19) und ein fokussierendes optisches System (13) mit festgelegter Schärfentiefe (31) umfasst, **dadurch gekennzeichnet, dass** die Beleuchtungsanordnung (9) mindestens ein optisches Modifikationselement (47) zur geometrischen Modifikation des Beleuchtungsstrahlenbündels (7) aufweist, wobei das optische Modifikationselement (47) ausgestaltet ist, das Beleuchtungsstrahlenbündel (7) mit sphärischen Aberrationen zu beaufschlagen, wobei am probenseitigen Beleuchtungsausgang (6) der Beleuchtungsanordnung (9) unterschiedliche Strahlen (21) des Beleuchtungsstrahlenbündels (7) die optische Achse (17) innerhalb eines Achsenschnittbereichs (69) an voneinander beabstandeten Stellen schneiden, und dass sich der Achsenschnittbereich (69) entlang der optischen Achse (17) über eine Länge erstreckt, die mindestens so groß ist, wie die Schärfentiefe (31) des fokussierenden optischen Systems (13).

2. Beleuchtungsanordnung (9) nach Anspruch 1, **dadurch gekennzeichnet, dass** das optische Modifikationselement (47) mindestens eine Linse (95a) mit sphärischer Aberration (51, 53) oder ein Linsensystem (95b) mit sphärischer Aberration (51, 53) aufweist.

3. Beleuchtungsanordnung (9) nach Anspruch 1 oder 2, **dadurch gekennzeichnet, dass** ein Phasenmodulator (80) vorgesehen ist, der die Phase des Beleuchtungsstrahlenbündels (7) in Abhängigkeit von der räumlichen Lage mit Bezug zur optischen Achse (17) ändert.

4. Beleuchtungsanordnung (9) nach einem der Ansprüche 1 bis 3, **dadurch gekennzeichnet, dass** das optische Modifikationselement (47) als dreidimensionaler Volumenkörper (73) vorbestimmter Brechzahl (75) ausgestaltet und auf der Probenseite (19) der Beleuchtungsanordnung (9) angeordnet ist.

5. Beleuchtungsanordnung (9) nach einem der Ansprüche 1 bis 4, **dadurch gekennzeichnet, dass** mindestens eine Lichtquelle (107) vorgesehen ist, an deren Ausgang das Beleuchtungsstrahlenbündel (7) ausgegeben und in den Beleuchtungseingang (5) eingespeist wird.

6. Beleuchtungsanordnung (9) nach Anspruch 5, **dadurch gekennzeichnet, dass** die mindestens eine Lichtquelle (107) einen Fokus (105) des Beleuchtungsstrahlenbündels (7) aufweist, wobei die Lage des Fokus (105) entlang der optischen Achse (17) versetzt von einer beleuchtungsseitigen Brennebene (45) des fokussierenden optischen Systems (13) ausgebildet ist.

7. Beleuchtungsanordnung (9) nach Anspruch 5 oder 6, **gekennzeichnet durch** eine Lichtquelle (107) aus der folgenden Listen, umfassend:

   - eine inkohärente Lichtquelle;
   - eine breitbandige Lichtquelle;
   - einen Weißlichtlaser;
   - einen Kurzpulslaser; und
   - einen Ultrakurzpulslaser.

8. Beleuchtungsanordnung (9) nach Anspruch 7, **dadurch gekennzeichnet, dass** die Lichtquelle (107) Lichtimpulse mit einer Dauer kürzer als 1 ps emittiert und/oder eine Kohärenzlänge kleiner als 100 $\mu$m aufweist.

9. Mikroskop (1) in Form eines Lichtblatt- oder SPIM-Mikroskops (3) oder eines Schiefeebenenmikroskops, wie ein OPM- oder SCAPE-Mikroskop, wobei das Mikroskop (1) ein Probenvolumen (26) und eine Beleuchtungsanordnung (9) nach einem der Ansprüche 1 bis 8 zur Beleuchtung des Probenvolumens (26) mit einem Lichtblatt (35) umfasst.

10. Verfahren zur Beleuchtung eines Probenvolumens in einem Mikroskop (1) in Form eines Lichtblatt- oder SPIM-Mikroskops (3) oder eines Schiefebenenmikroskops, wie ein OPM- oder SCAPE-Mikroskop, umfassend die folgenden Verfahrensschritte

    - Einspeisen eines Beleuchtungsstrahlenbündels (7) in einen Beleuchtungseingang (5) einer Beleuchtungsanordnung (9) mit fokussierendem optischen System (13) festgelegter Schärfentiefe (31) entlang einer optischen Achse (17);
    - Beaufschlagen des Beleuchtungsstrahlenbündels (7) mit sphärischen Aberrationen;
    - Erzeugen von Schnittpunkten (49) von Strahlen (21) des Beleuchtungsstrahlenbündels (7) mit der optischen Achse (17) an voneinander beabstandeten Stellen in einem Achsenschnittbereich (69), der sich entlang der optischen Achse (17) über eine Länge erstreckt, die mindestens so groß ist, wie die Schärfentiefe (31) des fokussierenden optischen Systems (13).

11. Verfahren nach Anspruch 10, wobei ferner das lokale Ändern der Phase des Beleuchtungsstrahlenbündels (7) in Abhängigkeit von der räumlichen Lage mit Bezug zur optischen Achse (17) vorgesehen ist.

12. Verfahren nach Anspruch 10 oder 11, wobei das Verfahren ferner die Verfahrensschritte

    - Erzeugen von mindestens zwei Beleuchtungstrahlenbündeln (7);
    - Überlagern der mindestens zwei Beleuchtungsstrahlenbündel (7) auf der Probenseite (19) und Erzeugen von Interferenzstrukturen aufgrund des Überlagerns; und
    - (a) Variieren der Lage der Interferenzstrukturen sowie Auswerten der erhaltenen Interferenzstrukturen zur Steigerung des Kontrastes oder
    - (b) Oszillieren der Interferenzstrukturen zur Homogenisierung der Beleuchtungsintensität des Lichtblattes (35) umfasst.

**Claims**

1. An illumination arrangement (9) for a microscope (1) in the form of a light sheet or SPIM microscope (3) or an oblique plane microscope, such as an OPM or SCAPE microscope, for illuminating a sample with a light sheet (35), wherein the illumination arrangement (9) comprises an illumination input (5) for feeding an illumination beam bundle (7) along an optical axis (17) of the illumination arrangement (9), an illumination output (6) facing a sample side (19) for outputting the illumination beam bundle (7) to the sample side (19), and a focusing optical system (13) with a defined depth of field (31), **characterised in that** the illumination arrangement (9) has at least one optical modification element (47) for geometric modification of the illumination beam bundle (7), wherein the optical modification element (47) is configured to apply spherical aberrations to the illumination beam bundle (7), wherein on the sample-side illumination output (6) of the illumination arrangement (9) different beams (21) of the illumination beam bundle (7) intersect the optical axis (17) within an axis intersection region (69) at points spaced apart from one another, and **in that** the axis intersection region (69) extends along the optical axis (17) over a length that is at least as large as the depth of field (31) of the focusing optical system (13).

2. The illumination arrangement (9) according to claim 1, **characterised in that** the optical modification element (47) has at least one lens (95a) with spherical aberration (51, 53) or a lens system (95b) with spherical aberration (51, 53).

3. The illumination arrangement (9) according to claim 1 or 2, **characterised in that** a phase modulator (80) is provided which changes the phase of the illumination beam bundle (7) as a function of the spatial position with respect to the optical axis (17).

4. The illumination arrangement (9) according to any one of claims 1 to 3, **characterised in that** the optical modification element (47) is configured as a three-dimensional solid body (73) with a predetermined refractive index (75) and is arranged on the sample side (19) of the illumination arrangement (9).

5. The illumination arrangement (9) according to any one of claims 1 to 4, **characterised in that** at least one light source (107) is provided at the output of which the illumination beam bundle (7) is output and fed into the illumination input (5).

6. The illumination arrangement (9) according to claim 5, **characterised in that** the at least one light source (107) has a focus (105) of the illumination beam bundle (7), wherein the position of the focus (105) along the optical axis (17) is offset from an illumination-side focal plane (45) of the focusing optical system (13).

7. The illumination arrangement (9) according to claim 5 or 6, **characterised by** a light source (107) from the following lists, comprising:

    - an incoherent light source;
    - a broadband light source;

- a white light laser;
- a short pulse laser; and
- an ultrashort pulse laser.

8. The illumination arrangement (9) according to claim 7, **characterised in that** the light source (107) emits light pulses with a duration shorter than 1 ps and/or has a coherence length smaller than 100 μm.

9. A microscope (1) in the form of a light sheet or SPIM microscope (3) or an oblique plane microscope, such as an OPM or SCAPE microscope, wherein the microscope (1) comprises a sample volume (26) and an illumination arrangement (9) according to any one of claims 1 to 8 for illuminating the sample volume (26) with a light sheet (35).

10. A method for illuminating a sample volume in a microscope (1) in the form of a light sheet or SPIM microscope (3) or an oblique plane microscope, such as an OPM or SCAPE microscope, comprising the following method steps

  - feeding an illumination beam bundle (7) into an illumination input (5) of an illumination arrangement (9) with a focusing optical system (13) of defined depth of field (31) along an optical axis (17);
  - applying spherical aberrations to the illumination beam bundle (7);
  - generating intersection points (49) of beams (21) of the illumination beam bundle (7) with the optical axis (17) at points spaced apart from one another in an axis intersection region (69) extending along the optical axis (17) over a length that is at least as large as the depth of field (31) of the focusing optical system (13).

11. The method according to claim 10, wherein it is further provided for the phase of the illumination beam bundle (7) to be changed locally as a function of the spatial position with respect to the optical axis (17).

12. The method according to claim 10 or 11, wherein the method further comprises the method steps

  - generating at least two illumination beam bundles (7);
  - superimposing the at least two illumination beam bundles (7) on the sample side (19) and generating interference structures due to the superimposition; and
  - (a) varying the position of the interference structures as well as evaluating the received interference structures to increase the contrast or
  - (b) oscillating the interference structures to homogenise the illumination intensity of the light sheet (35).

**Revendications**

1. Ensemble d'éclairage (9) pour un microscope (1) sous la forme d'un microscope à nappe de lumière ou à SPIM (3) ou d'un microscope à plan incliné, comme un microscope OPM ou SCAPE, pour éclairer un échantillon avec une nappe de lumière (35), dans lequel l'ensemble d'éclairage (9) comprend une entrée d'éclairage (5) pour injecter un faisceau (7) de rayons d'éclairage le long d'un axe optique (17) de l'ensemble d'éclairage (9), une sortie d'éclairage (6) tournée vers un côté d'échantillon (19) pour émettre le faisceau (7) de rayons d'éclairage vers le côté d'échantillon (19) et un système optique de mise au point (13) à profondeur de champ déterminée (31), **caractérisé en ce que** l'ensemble d'éclairage (9) présente au moins un élément de modification optique (47) pour modifier géométriquement le faisceau (7) de rayons d'éclairage, dans lequel l'élément de modification optique (47) est configuré pour soumettre le faisceau (7) de rayons d'éclairage à l'action d'aberrations sphériques, dans lequel différents rayons (21) du faisceau (7) de rayons d'éclairage croisent l'axe optique (17) à l'intérieur d'une zone d'intersection (69) d'axe sur des endroits espacés les uns des autres sur la sortie d'éclairage (6) côté échantillon de l'ensemble d'éclairage (9), et que la zone d'intersection (69) d'axe s'étend le long de l'axe optique (17) sur une longueur qui est au moins aussi grande que la profondeur de champ (31) du système optique de mise au point (13).

2. Ensemble d'éclairage (9) selon la revendication 1, **caractérisé en ce que** l'élément de modification optique (47) présente au moins une lentille (95a) à aberration sphérique (51, 53) ou un système de lentilles (95b) à aberration sphérique (51, 53).

3. Ensemble d'éclairage (9) selon la revendication 1 ou la revendication 2, **caractérisé en ce qu'**est prévu un modulateur de phase (80), qui modifie la phase du faisceau (7) de rayons d'éclairage en fonction de la position spatiale par rapport à l'axe optique (17).

4. Ensemble d'éclairage (9) selon l'une quelconque des revendications 1 à 3, **caractérisé en ce que** l'élément de modification optique (47) est configuré en tant que corps volumique tridimensionnel (73) à indice de réfraction (75) prédéterminé et est disposé sur le côté d'échantillon (19) de l'ensemble d'éclairage (9).

5. Ensemble d'éclairage (9) selon l'une quelconque des revendications 1 à 4, **caractérisé en ce qu'est prévue au** moins une source de lumière (107), à la sortie de laquelle le faisceau (7) de rayons d'éclairage est émis et est injecté dans l'entrée d'éclairage (5).

6. Ensemble d'éclairage (9) selon la revendication 5, **caractérisé en ce que** l'au moins une source de lumière (107) présente un foyer (105) du faisceau (7) de rayons d'éclairage, dans lequel la position du foyer (105) est réalisée le long de l'axe optique (17) est réalisée de manière décalée par rapport à un plan focal côté éclairage (45) du système optique de mise au point (13).

7. Ensemble d'éclairage (9) selon la revendication 5 ou la revendication 6, **caractérisé par** une source de lumière (107) issue des listes suivantes, comprenant :

    - une source de lumière incohérente ;
    - une source de lumière à large bande ;
    - un laser à lumière blanche ;
    - un laser à impulsions courtes ; et
    - un laser à impulsions ultracourtes.

8. Ensemble d'éclairage (9) selon la revendication 7, **caractérisé en ce que** la source de lumière (107) émet des impulsions lumineuses d'une durée inférieure à 1 ps et/ou présente une longueur de cohérence inférieure à 100 $\mu$m.

9. Microscope (1) sous la forme d'un microscope à nappe de lumière ou à SPIM (3) ou d'un microscope à plan incliné, comme un microscope OPM ou SCAPE, dans lequel le microscope (1) comprend un volume d'échantillon (26) et un ensemble d'éclairage (9) selon l'une quelconque des revendications 1 à 8 pour éclairer le volume d'échantillon (26) avec une nappe de lumière (35).

10. Procédé d'éclairage d'un volume d'échantillon dans un microscope (1) sous la forme d'un microscope à nappe de lumière ou à SPIM (3) ou d'un microscope à plan incliné, comme un microscope OPM ou SCAPE, comprenant les étapes de procédé suivantes

    - d'injection d'un faisceau (7) de rayons d'éclairage dans une entrée d'éclairage (5) d'un ensemble d'éclairage (9) avec système optique de mise au point (13) à profondeur de champ (31) déterminée le long d'un axe optique (17) ;
    - d'exposition du faisceau (7) de rayons d'éclairage à l'action d'aberrations sphériques ;
    - de génération de points d'intersection (49) de rayons (21) du faisceau (7) de rayons d'éclairage avec l'axe optique (17) sur des emplacements espacés les uns des autres dans une zone d'intersection (69) d'axe, qui s'étend le long de l'axe optique (17) sur une longueur qui est au moins aussi grande que la profondeur de champ (31) du système optique de mise au point (13).

11. Procédé selon la revendication 10, dans lequel il est en outre prévu de modifier localement la phase du faisceau (7) de rayons d'éclairage en fonction de la position spatiale par rapport à l'axe optique (17).

12. Procédé selon la revendication 10 ou la revendication 11, dans lequel le procédé comprend en outre les étapes de procédé

    - de génération d'au moins deux faisceaux (7) de rayons d'éclairage ;
    - de superposition des au moins deux faisceaux (7) de rayons d'éclairage sur le côté d'échantillon (19) et de génération de structures d'interférence en raison de la superposition ; et
    - (a) de variation de la position des structures d'interférence et d'évaluation des structures d'interférence obtenues pour augmenter le contraste ou
    - (b) d'oscillation des structures d'interférence pour homogénéiser l'intensité d'éclairage de la nappe de lumière (35).

FIG. 1
(Stand der Technik)

FIG. 2a

FIG. 2b

FIG. 2c

EP 3 834 025 B1

FIG. 3

FIG. 4

FIG. 4 a

EP 3 834 025 B1

FIG. 5

FIG. 6

EP 3 834 025 B1

FIG. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 03012528 A2
- WO 2016016642 A1
- DE 102016212020 A1
- US 2013286181 A1
- WO 2012003259 A1


**In der Beschreibung aufgeführte Nicht-Patentliteratur**

- **TOM VETTENBURG et al.** Light sheet microscopy using an Airy beam. *Nature Method*, April 2014, vol. 11 (5), 6
- **MARTI DUOCASTELLA et al.** Selectable light-sheet uniformity using tuned axial scanning: Selectable Light-Sheet Uniformity. *Microscopy Research and Technique*, February 2017, vol. 80 (2), 1
- **KOZAWA YUICHI et al.** Long depth-of-focus imaging by a non-diffracting optical needle under strong Aberration. *2017 Conference on lasers and electro-optics*, 14 May 2017
- **JÖRG G. RITTER et al.** A cylindrical zoom lens unit for adjustable optical sectioning in light sheet microscopy References and links / Biomedical. *Optics Express 185*, 01 January 2012, vol. 170
- **ACEBAL P. et al.** Generations of High-Quality Tunable One-Dimensional Airy Beams Using the Aberrations of a Sigle Lens. *IEEE Photonics Journal*, October 2012, vol. 4 (5), 1